# FASCICULE DE BREVET EUROPEEN

(11) **EP 1 261 469 B1**
(45) Date de publication et mention de la délivrance du brevet: **16.03.2005**
(21) Numéro de dépôt: 01942594.1
(22) Date de dépôt: 24.01.2001
(51) Int. Cl.: B29C 47/20, B29C 47/88, D01D 10/00, D01D 5/088

(54) **PROCEDE ET DISPOSITIF DE TRANSFORMATION DE POLYMERES CRISTALLINS OU SEMI-CRISTALLINS**
VERFAHREN UND VORRICHTUNG ZUR VERARBEITUNG VON KRISTALLINEN ODER TEILKRISTALLINEN POLYMEREN
METHOD AND DEVICE FOR TRANSFORMING CRYSTALLINE OR SEMICRYSTALLINE POLYMERS

(30) Priorité: 24.01.2000 BE 200000052
(43) Date de publication de la demande: 04.12.2002
(73) Titulaire: International Brain System S.A., 4052 Beaufays (BE)
(72) Inventeur: Soulier, Joel, 28100 Dreux (FR)
(74) Mandataire: Powis de Tenbossche, Roland
(86) Numéro de dépôt international: PCT/BE2001/000012
(87) Numéro de publication internationale: WO 2001/053060

(56) Documents cités:
- EP-A- 0 171 017
- GB-A- 1 085 765
- PATENT ABSTRACTS OF JAPAN vol. 013, no. 335 (M-856), 27 juillet 1989 (1989-07-27) & JP 01 113224 A (CANON INC), 1 mai 1989 (1989-05-01)

## Description

La présente invention a pour objet un procédé de transformation de matières thermoplastiques, en particulier de matières contenant au moins un polymère ou copolymère cristallin ou semi-cristallin présentant une température de fusion, une température de cristallisation et une température de transition vitreuse.

La transformation des polymères, en particulier l'extrusion de profilés pleins ou creux, est bien connue dans l'état de la technique. Les dispositifs connus tels que bacs à vide, filière d'extrusion, etc. conviennent pour des thermoplastiques qui ne subissent pas de variations brusques de viscosité, tels que polyéthylène, polychlorure de vinyle, etc.

Par le document EP-A-0 171 007, on connaît un procédé de transformation de matières thermoplastiques présentant une température de fusion et une température de solidification,
- dans lequel on chauffe la matière thermoplastique à une température supérieure à la température de fusion,
- dans lequel on transforme ladite matière chauffée dans un dispositif de mise en forme en y abaissant la température de la matière thermoplastique d'une température au moins proche de la température de fusion jusqu'à une température inférieure à la température de solidification ; et
- dans lequel on soumet la matière thermoplastique avant son passage dans le dispositif de mise en forme à un champ électrique statique.

Ce document ne décrit pas que le champ électrique statique soit soumis, d'une part à une électrode positive en contact avec la matière thermoplastique, et d'autre part, une électrode négative ou masse en contact avec la matière thermoplastique.

Pour les polymères cristallins ou semi-cristallins, tels que polyéthylène téréphtalate (PET), les dispositifs connus sont inopérants, parce que la phase à très basse viscosité est suivie très rapidement d'une phase gel, c'est-à-dire qu'on passe trop rapidement d'une matière trop fluide pour être introduite dans un conformateur, à une matière trop rigide pour être conformée. D'autre part, le retrait exercé sur le poinçon de conformation, par exemple dans le cas d'une extrusion d'un tube, entraîne un frottement important qui ne peut pas être compensé par la poussée de la vis d'une extrudeuse.

La présente invention a pour objet, un procédé qui permet entre autres l'extrusion de polymère cristallin ou semi-cristallin, en particulier du polyéthylène téréphtalate, mais également un procédé qui permet une extrusion plus facile de matières thermoplastiques, telles que polyéthylène, polypropylène, PVC, polycarbonate, etc.

Le procédé suivant l'invention s'applique en particulier à la transformation de polymère cristallin ou semi-cristallin, de préférence des polymères ou mélanges de polymères présentant des cristaux solides en dessous de la température de cristallisation, de façon avantageuse présentant sensiblement uniquement des cristaux solides en dessous de la température de cristallisation. En particulier, le polymère ou copolymère cristallin contient moins de 40% en poids de polymère(s) non cristallins ou non semi-cristallin ou présentant des cristaux liquides en dessous de la température de cristallisation. En particulier, le polymère cristallin ou semi-cristallin contient moins de 20% en poids de polymère cristallin liquide et/ou moins de 20% en poids de polyoléfine, en particulier pas ou sensiblement pas de polymères cristallins liquides et de polyoléfines (par exemple moins de 10% en poids de polymère cristallin liquide et moins de 10% en poids de polyoléfines). Les polymères cristallins liquides sont des polymères thermotmpes présentant des cristaux liquides à une température inférieure à la température de cristallisation, mais supérieure à la température de durcissement

Le procédé suivant l'invention est un procédé de transformation de matières thermoplastiques présentant une température de fusion et une température de solidification,
- dans lequel on chauffe la matière thermoplastique à une température supérieure à la température de fusion,
- dans lequel on transforme ladite matière chauffée dans un dispositif de mise en forme en y abaissant la température de la matière thermoplastique d'une température au moins proche de la température de fusion jusqu'à une température inférieure à la température de solidification,
- dans lequel on soumet la matière thermoplastique avant son passage dans le dispositif de mise en forme à un champ électrique statique
ledit procédé étant caractérisé en ce qu'on soumet la matière thermoplastique avant et/ou pendant son passage dans le dispositif de mise en forme, au champ électrique statique entre une électrode positive et une électrode négative ou masse, lesdites électrodes ou ladite électrode et masse étant en contact avec la matière thermoplastique.

De façon avantageuse, on soumet la matière thermoplastique avant et/ou pendant son passage dans le dispositif de mise en forme, à un champ électrique statique d'au moins 800.000V/m, de préférence d'au moins 1.000.000 V/m, plus particulièrement de 5.000.000 V/m à 20.000.000 V/m, entre une électrode positive et une électrode négative en contact avec la matière thermoplastique.

Le temps d'application du champ électrique sur une zone de matière thermoplastique peut varier, par exemple, d'une fraction de seconde à plusieurs secondes, voire quelques minutes. Par exemple, ce temps d'application est compris entre 0 ,5 et 45 secondes.

De façon avantageuse, la matière thermoplastique se déplace avant et/ou pendant son passage dans le dispositif de mise en forme, entre une électrode positive et une électrode négative ou masse en contact avec la matière thermoplastique, ledit champ étant sensiblement perpendiculaire à l'écoulement de la matière thermoplastique entre l'électrode positive et l'électrode négative ou masse.

De préférence, on crée un effet d'électrostriction et/ou piézo-électrique inverse dans la matière thermoplastique entre l'électrode positive et l'électrode négative ou masse.

De façon avantageuse, on soumet la matière thermoplastique à un champ électrique sensiblement radial lors de sa mise en forme depuis une température de la matière supérieure à la température de fusion ou proche de la température de fusion jusqu'à une température correspondant à on état solide de la matière.

Selon une forme préférée, le procédé suivant l'invention est un procédé dans lequel on transforme une matière thermoplastique contenant au moins un polymère ou copolymère cristallin ou semi-cristallin présentant une température de fusion, une température de cristallisation inférieure à la température de fusion et une température de transition vitreuse, ledit polymère ou copolymère présentant de préférence sensiblement uniquement des cristaux solides en dessous de la température de cristallisation,
- dans lequel on chauffe la matière à une température supérieure à la température de fusion du polymère ou copolymère cristallin ou semi-cristallin, et
- dans lequel on transforme ladite matière chauffée dans un dispositif de mise en tonne en y abaissant la température de la matière d'une température supérieure à la température de cristallisation jusqu'à une température inférieure à la température de transition vitreuse du polymère ou copolymère cristallin ou semi-cristallin.

Le procédé présente la particularité qu'au moins pour une température supérieure à la température de transition vitreuse, de préférence pour une température supérieure à la température de cristallisation ( de façon avantageuse au moins pour une plage de température supérieure à la température de transition vitreuse, de préférence pour une plage de température supérieure à la température de cristallisation), on soumet la matière à un champ électrique statique.
Selon une forme avantageuse du procédé, au moins lors de l'abaissement de la température d'une température supérieure à la température de cristallisation jusqu'à une température comprise entre la température de transition vitreuse et la température de cristallisation, on soumet la matière à un champ électrique.

Le champ électrique est en particulier appliqué pour créer un effet d'électrostriction et/ou un effet piézo-électrique inverse. L'effet d'électrostriction est en particulier réalisé à une température proche de la température de cristallisation du polymère ou copolymère cristallin, tandis que l'effet piézo-électrique inverse est réalisé à une température proche de la température de transition vitreuse. Ces effets permettent un écoulement et un glissement plus facile du polymère sur la surface en contact, en particulier sur la surface des électrodes en contact avec la matière.

Selon une forme de réalisation préférentielle, au moins lors de l'abaissement de la température d'une température supérieure à la température de cristallisation jusqu'à une température comprise entre la température de cristallisation et la température de transition vitreuse [en particulier jusqu'à une température proche de la température de transition vitreuse (de préférence inférieure ou égale à environ la température de transition vitreuse)], on soumet la matière à un champ électrique statique. On a remarqué qu'outre une moindre résistance au frottement, les propriétés ou caractéristiques mécaniques du produit étaient améliorées.

Par exemple, on soumet la matière à un champ électrique statique pour une plage de température allant d'une température supérieure à la température de cristallisation jusqu'à une température inférieure d'au moins 20°C par rapport à la température de cristallisation, de façon avantageuse inférieure d'au moins 50°C à la température de cristallisation, de préférence inférieure d'au moins 100°C à la température de cristallisation.

Selon une forme de réalisation avantageuse, au moins pour une température proche de la température de fusion, on soumet la matière à un champ électrique statique. Ceci est avantageux, car on a remarqué qu'à débit de matière constant à travers une filière, la pression nécessaire pour pousser la matière dans la filière était réduite dans le cas de l'application d'un champ électrique, par exemple d'au moins deux fois par rapport à la pression nécessaire lors de la non application d'un champ électrique.

Selon une forme particulièrement avantageuse, au moins pour une température proche de la température de fusion, ainsi que pour une plage de température comprise entre une première température supérieure à la température de cristallisation et une deuxième température comprise entre la température de cristallisation et la température de transition vitreuse, de préférence pour une plage de températures allant d'une température proche (en particulier supérieure à) de la température de fusion jusqu'à une température inférieure à la température de cristallisation, en particulier proche de la température de transition vitreuse, on soumet la matière à un champ électrique statique.

Selon une caractéristique d'une forme de réalisation, le champ électrique a une intensité d'au moins 800.000 Volts/m, de façon avantageuse d'an moins 1.000.000 Volts/m, de préférence d'au moins 2.000.000Volts/m, par exemple de 2.000.000Volts/m à 20.000.000Volts/m, plus spécifiquement de 5.000.000 V/m à 20.000.000V/m, telle que 5.000.000V/m,8.000.000 V/m et 10.000.000 V/m.

Dans le procédé suivant l'invention, on soumet avantageusement la matière à un champ électrique radial et/ou longitudinal et/ou transversal, mais de préférence au moins radial ou dans une direction traversant l'épaisseur de la matière, en particulier dans une direction sensiblement perpendiculaire à la direction d'écoulement de la matière dans la filière ou le dispositif de mise en forme.

Selon une forme de réalisation, on amène la matière en fusion de manière adiabatique ou sensiblement adiabatique dans le dispositif de mise en forme.

Selon une forme de réalisation avantageuse, on transforme une matière contenant au moins un additif pour accroître le caractère diélectrique, c'est-à-dire la constante diélectrique ou permittivité. Par exemple, on ajoute à la matière une quantité d'additif suffisante pour accroître d'au moins de 10% la constante diélectrique ou la permittivité du polymère ou copolymère cristallin ou semi-cristallin. A titre d'exemple d'additif, on peut citer les composés à base de titane, tels que le titanate de baryum, l'oxyde de titane (TiO₂), etc..

Le procédé suivant l'invention est particulièrement adapté pour la transformation du PET, éventuellement chargé, par exemple du PET provenant des déchets de fabrication de préforme ou de bouteille en PET.

Selon un détail d'un procédé suivant l'invention, le dispositif de mise en forme est un conformateur d'une extrudeuse ou un moule. Le champ électrique peut également être appliqué au niveau d'une filière, en particulier d'une filière d'extrusion. La filière ou dispositif de mise en forme comporte avantageusement un poinçon.destiné à former la forme intérieure de l'extrudât ou produit extrudé et une paroi destinée à former la forme ou contour extérieur de l'extrudât ou produit extrudé. Ce poinçon est avantageusement fixe ou sensiblement fixe par rapport à la filière ou conformateur. On crée alors avantageusement un champ électrique radial entre le poinçon et la paroi destinée à former la forme extérieure de l'extrudât ou produit extrudé, le poinçon constituant avantageusement une électrode négative ou la masse, tandis que la paroi constitue avantageusement une électrode positive.

Le dispositif de mise en forme du procédé suivant l'invention est avantageusement un moule et/ou un conformateur d'une extrudeuse, par exemple un conformateur associé à une filière pour réaliser un profilé, un tube, etc. Le dispositif de mise en forme peut également être un moule et/ou une filière, le ou les canaux d'injection d'un moule, pour réduire par exemple la pression d'injection et/ou augmenter le nombre d'empreintes du moules.

L'invention a encore pour objet un produit réalisé en un polymère ou copolymère cristallin ou semi-cristallin (chargé ou non) obtenu par le procédé selon l'invention. Avantageusement, le produit est réalisé en PET éventuellement chargé. On a remarqué qu'en induisant un champ électrique statique axial, en particulier radial par rapport à une paroi du produit, il était possible d'accroître les caractéristiques mécaniques de ladite paroi.
Selon une forme particulière du produit selon l'invention, le produit est une préforme pour bouteille.

La présente invention a également pour objet un dispositif pour donner une forme à une matière thermoplastique selon un procédé suivant l'invention. Ce dispositif comprend :
- une filière et/ou une chambre de mise en forme présentant un passage pour l'introduction de la matière (par exemple à une température proche de la température de fusion, de préférence supérieure à la température de fusion, ou à une température supérieure à la température de cristallisation ou à une température inférieure à la température de cristallisation), ladite chambre ou filière présentant une ou des parois en contact avec la matière thermoplastique (pour sa mise en forme);
- un moyen de refroidissement pour refroidir au moins partiellement une ou des parois , et
- un moyen pour créer un champ électrique statique dans le dispositif de mise en forme.

Le dispositif se caractérise en ce qu'il comporte
- un moyen pour relier au moins une paroi ou partie de paroi de la chambre ou filière en contact avec la matière thermoplastique avec une source électrique pour créer un champ électrique statique entre au moins cette paroi ou partie de paroi et une autre paroi ou partie de paroi de la chambre ou filière (parois ou parties de paroi qui sont en contact avec la matière thermoplastique).

De façon avantageuse, le dispositif comporte un premier moyen pour relier une première paroi ou partie de paroi à un pôle (par exemple le pôle positif) d'une source électrique, et un deuxième moyen pour relier une autre paroi ou partie de paroi à un autre pôle (par exemple le pôle négatif) de la source électrique ou à la masse, de manière à ce que la première paroi ou partie de paroi forme une électrode positive.

Selon une forme de réalisation possible, le dispositif comporte ou est associé à un moyen pour créer un champ électrique statique est un moyen comportant une électrode positive et une électrode négative ou masse, lesdites électrodes ou masse étant en contact avec la matière thermoplastique, ledit moyen créant entre lesdites électrodes ou entre la ou les électrodes positives et la masse, un champ électrique statique d'au moins 800.000V/m, de préférence d'au moins 1.000.000 V/m (en particulier supérieur à 2.000.000 V/m, par exemple de 5.000.000V/m à 20.000.000V/m).

De préférence, les électrodes positive(s) et négative(s) ou masse forment des parois d'un canal dans lequel se déplace dans une direction la matière thermoplastique, lesdites électrodes ou masse étant agencées pour créer un champ électrique statique sensiblement perpendiculaire à la direction d'écoulement de la matière dans le canal.

Selon un détail d'une forme de réalisation, le dispositif comporte une filière associée à une chambre de mise en forme, et des moyens pour connecter une ou des parois de la filière et de la chambre de mise en forme à au moins une source électrique, pour créer un champ électrique statique dans la filière et un champ électrique statique dans la chambre de mise en forme.

Selon une forme de réalisation avantageuse, le dispositif de mise en forme, avantageusement associé à une filière, présente un canal défini entre une paroi d'une électrode positive et une paroi d'une électrode négative ou masse, ledit canal présentant un passage pour l'introduction de matière thermoplastique en fusion (ou proche de la température de fusion) dans le canal. Sensiblement toute la surface de(s) paroi(s) du canal du dispositif de mise en forme (plus éventuellement celle(s) de la filière) en contact avec la matière thermoplastique est constituée par des parois d'électrodes ou par des parois d'électrode et la masse. De façon avantageuse, les électrodes et/ou masse sont placées ou disposées pour qu'un champ électrique soit appliqué sensiblement radialement dans tout le dispositif de mise en forme, ainsi qu'éventuellement dans la filière. Lorsque le dispositif de mise en forme présente un passage pour la sortie de la matière mise en forme (par exemple à une température inférieure à la température de cristallisation, par exemple à une température comprise entre la température de transition vitreuse et la température de cristallisation), les électrodes (ou la ou les électrodes et la masse) sont avantageusement disposées ou agencées pour qu'un champ électrique radial soit créé dans la matière sensiblement depuis le passage d'introduction de la matière dans le dispositif de mise en forme, jusqu'au passage de sortie de la matière hors du dispositif de mise en forme.

Selon une forme de réalisation avantageuse, la ou les parois du dispositif de mise en tonne ou du conformateur ou du moule et/ou de la filière en contact avec la matière sont munies d'alumine, en particulier sont recouvertes d'une couche contenant de l'alumine.

Selon une forme de réalisation, le dispositif comporte un poinçon destiné à former la forme intérieure du produit formé dans la chambre de mise en forme, cette dernière présentant une paroi destinée à former la forme extérieure du produit Le poinçon et la paroi destinée à former la forme extérieure du produit constituent des électrodes ou une électrode et une masse pour créer un champ électrique radial, le poinçon constituant avantageusement une électrode négative ou la masse, tandis que la paroi constitue avantageusement une électrode positive.

Avantageusement, le dispositif comporte une électrode positive et une électrode négative agencées pour former entre elles un champ électrique et constituant des parois de la chambre de mise en forme en contact avec la matière thermoplastique, l'électrode positive étant avantageusement réalisée en alliage d'aluminium, la face de contact de l'électrode avec la matière thermoplastique étant de préférence munie d'une couche d'alumine d'au moins 25um d'épaisseur.

Selon une particularité, les parois du dispositif de mise en forme ou du conformateur et/ou de la filière en contact avec la matière thermoplastique sont munies d'alumine, en particulier sont recouvertes d'une couche contenant de l'alumine.

Selon une forme de réalisation, la chambre de mise en forme est un moule.

Avantageusement, un ou des moyens isolants s'étendent entre l'électrode positive ou reliée au pôle positif d'une source de courant, et la masse ou l'électrode négative ou reliée au pôle négatif d'une source de courant, un moyen isolant étant avantageusement formé par une couche d'un fluide ou liquide isolant ou diélectrique.
Le dispositif présente avantageusement une chambre en contact avec l'électrode positive, dans laquelle se trouve le liquide ou fluide isolant, et des passages communiquant avec ladite chambre, lesdits passages étant munis d'un moyen pour relier la chambre à un système de circulation de liquide ou fluide isolant, ce système comportant avantageusement un système de refroidissement.

Selon un détail d'une forme de réalisation, la longueur de l'électrode positive ou des électrodes positives en contact avec la matière, longueur calculée dans le sens d'avancement de la matière dans la chambre de mise en forme ou filière, est supérieure à 5 cm, avantageusement supérieure à 10cm, de préférence supérieure à 20cm. Cette longueur est par exemple comprise entre 20 cm et 2m, voire plus. La longueur de l'électrode positive ou des électrodes positives sera adaptée en fonction des zones où un champ électrique doit être appliqué, en fonction du débit de matière, en fonction de la qualité des produits à obtenir, en fonction de la taille, de l'épaisseur des produits, etc.

Le dispositif selon l'invention est en particulier un dispositif de mise en forme d'une matière en polymère ou copolymère cristallin ou semi-cristallin selon un procédé selon l'invention. Le dispositif comprend :
- une chambre de mise en forme présentant un orifice pour l'introduction de la matière à une température supérieure à la température de cristallisation, ladite chambre s'étendant au moins entre une première paroi ou première partie de paroi et une deuxième paroi ou deuxième partie de paroi;
- un moyen de refroidissement pour refroidir au moins une paroi ou partie de paroi de. la chambre,
- éventuellement une filière dont la sortie communique avec l'orifice pour l'introduction de matière dans la chambre de mise en forme, et
- un moyen pour créer un champ électrique statique entre au moins une partie de la première paroi ou première partie de paroi et au moins une partie de la deuxième paroi ou deuxième partie de paroi et/ou dans la filière.

De préférence, le dispositif comporte une filière et des moyens pour créer un champ électrique dans la filière et dans la chambre de mise en forme.

Avantageusement, le dispositif selon l'invention comporte un moyen pour acheminer de manière adiabatique ou sensiblement adiabatique (c-à-d sans échange ou transfert de chaleur), à une température supérieure à la température de cristallisation, la matière dans la chambre de mise en forme.

De préférence, la chambre de mise en forme présente un orifice de sortie par lequel la matière mise en forme sort à une température inférieure à la température de transition vitreuse. Par exemple, la chambre de mise en forme est une filière d'extrusion, en particulier d'un profilé creux, d'un tube, d'une conduite, d'une gaine, etc.

Selon des formes de réalisation possibles, le moyen pour créer un champ électrique comporte au moins deux électrodes disposées pour créer un champ électrique radial, et/ou transversal, et/ou longitudinal.
De préférence, le moyen pour créer un champ électrique comporte au moins deux électrodes disposées pour créer un champ électrique radial dans la chambre de mise en forme. Selon une variante particulièrement avantageuse, le dispositif comporte en outre au moins deux électrodes disposées pour créer un champ électrique radial dans la filière.

Selon une forme de réalisation préférée, le moyen pour créer un champ électrique est agencé par rapport au moyen de refroidissement pour créer un champ électrique au moins dans une zone de la chambre de mise en forme dans laquelle la matière passe d'une température supérieure à la température de cristallisation à une température sensiblement égale à la température de transition vitreuse.

Selon une autre forme de réalisation possible, le dispositif comporte un ou des moyens pour créer un champ électrique au moins dans une zone de la filière et au moins dans une zone de la chambre de mise en forme, de manière à exercer un champ électrique sur la matière depuis une température supérieure à la température de fusion jusqu'à une température inférieure à la température de cristallisation, par exemple jusqu'à une température proche de la température vitreuse, voire inférieure à la température vitreuse.

Selon un détail d'une forme de réalisation, le dispositif comporte un poinçon destiné à former la forme intérieure du produit formé dans la chambre de mise en forme, cette dernière présentant une paroi destinée à former la forme extérieure du produit. Le poinçon et la paroi destinée à former la forme extérieure du produit constituent des électrodes pour créer un champ électrique radial, le poinçon constituant avantageusement une électrode négative ou la masse, tandis que la paroi constitue avantageusement une électrode positive.

Selon un autre détail d'une forme de réalisation, le dispositif comporte une électrode positive et une électrode négative agencées pour former entre elles un champ électrique et constituant des parois de la chambre de mise en forme en contact avec le polymère ou copolymère cristallin ou semi-cristallin, l'électrode positive étant avantageusement réalisée en alliage d'aluminium, la face en contact avec le polymère ou copolymère cristallin ou semi-cristallin étant de préférence traitée pour recevoir une couche d'alumine d'au moins 25µm d'épaisseur.

Des particularités et détails de l'invention ressortiront de la description d'exemples de réalisation. Dans cette description, il est fait référence aux dessins ci-annexés. Dans ces dessins,
- la figure 1 est une vue schématique d'une extrudeuse munie d'un dispositif suivant l'invention,
- la figure 2 est une vue en coupe d'un détail de la filière d'exclusion de la figure 1,
- la figure 3 est une vue en coupe transversale de la filière d'extrusion,
- les figures 4 à 7 sont des vues montrant le placement des électrodes pour obtenir un champ particulier,
- la figure 8 est une vue schématique d'un moule suivant l'invention,
- la figure 9 représente la courbe enthalpique du PET relevée par la méthode DSC (differential scanning calorimetry),
- les figures 10 à 12 sont des vues schématiques de formes de réalisation particulières de dispositif suivant l'invention,
- la figure 13 représente une disposition d'électrodes dans un canal d'injection d'un moule,
- la figure 14 montre l'évolution de la pression nécessaire au passage de POM au travers d'un dispositif de mise en forme au cours du temps (le temps 0 correspondant au temps de début d'introduction de polymère dans le dispositif) avec et sans application d'un champ électrique radial,
- les figures 15 à 17 sont des graphes similaires à celui de la figure 14, si ce n'est que la matière extrudée est respectivement du PET, du PE haute densité, et du polypropylène.

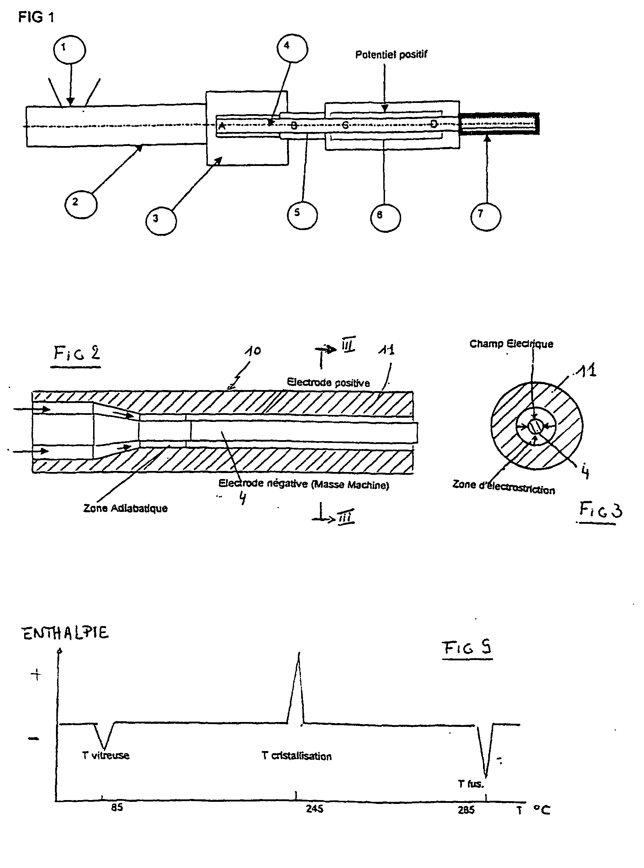

La figure 1 montre une extrudeuse 2 recevant du polymère cristallin ou semi-cristallin (par exemple du PET sous forme de granules ou de copeaux) par la trémie d'alimentation 1. Le polymère est fondu dans l'extrudeuse 2 et est poussé dans la tête 3, qui est munie dans sa zone A d'un poinçon 4 destiné à donner la forme intérieure de l'extrudât L'extradât passe ensuite dans une zone adiabatique B (zone 5 où il n'y a pas ou sensiblement pas d'échange de chaleur). Cette zone est avantageusement convergente, c'est-à-dire que la section de passe de cette zone diminue dans le sens d'avancement de la matière. La température du polymère dans cette zone 5 est légèrement supérieure au pic de cristallisation, par exemple une température de 1 à 20°C supérieure au pic de cristallisation. Le polymère fondu passe ensuite dans la zone C, zone soumise à un refroidissement important et à un champ électrique important. La zone C constitue ainsi un condensateur 6. Ce champ électrique est maintenu jusqu'à ce que la température du polymère soit égale ou inférieure à la température de transition vitreuse du polymère (zone D). Le produit stabilisé 7 sort ainsi de la filière d'extrusion.

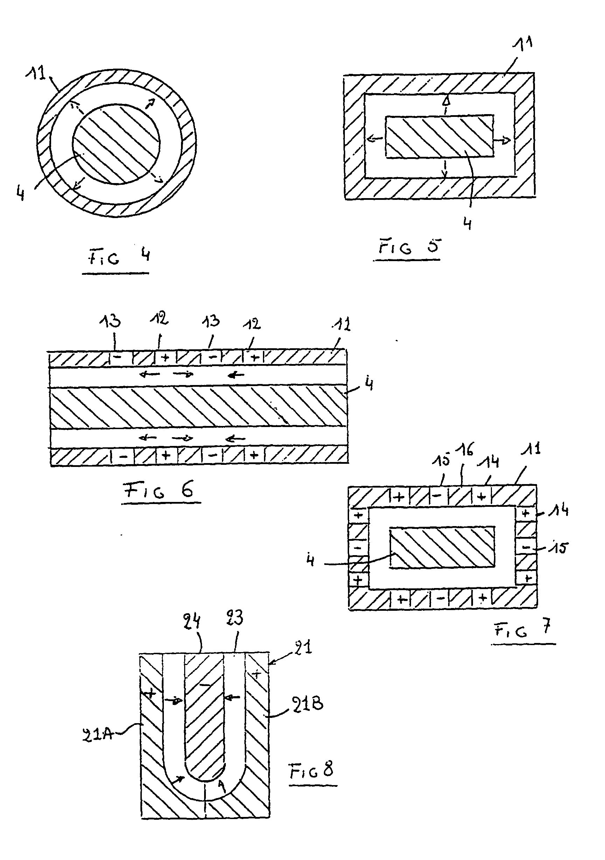

La figure 2 est une vue en coupe de la filière d'extrusion prolongé par un dispositif de mise en forme. L'ensemble filièr,>J&spositif de mise en forme 10 comporte une enveloppe 11 présentant un passage dans lequel s'étend le poinçon 4. Le poinçon 4 constitue une électrode négative ou la masse de la machine, tandis que l'enveloppe 11 constitue l'électrode positive. Le champ électrique ainsi créé est un champ radial dirigé vers le poinçon 4. Ce champ électrique radial (voir figure 3) induit un phénomène d'électrostriction dans le cristallites, ce qui se traduit par un léger décollement du polymère par rapport à l'électrode positive (polymère dont la température est inférieure à la température ou pic de cristallisation). La face intérieure de l'enveloppe 11 est par exemple réalisée en alliage d'aluminium, avantageusement traitée et recouverte d'une couche d'alumine Al₂O₃. Ce léger décollement permet le déplacement du produit dans la filière d'extrusion par la force de la vis de l'extrudeuse et permet au produit de sortir de la filière d'extrusion. Le champ électrique entre les électrodes était dans le cas présent un champ de 5.000.000 Volts/m. La matière entre par exemple dans l'ensemble 10 à une température supérieure de la température de fusion et sort à une température inférieure à la température de cristallisation.

L'électrode positive 11 est isolée de la masse (par exemple par des coussins isolant électrique) et est associée à un ou des canaux de refroidissement.

Le refroidissement de l'ensemble 10 (filière d'extrusion et/ou dispositif de mise en forme) est par exemple réalisé au moyen d'un liquide isolant électrique et à haut pouvoir calorifique, en particulier au moyen d'une huile diélectrique. Eventuellement, on aurait pu utiliser une circulation de gaz à basse température, par exemple de l'azote, pour effectuer ce refroidissement.
Ce fluide isolant sert donc également d'isolation électrique pour l'électrode positive. Cette isolation est par exemple utile si les canaux dans lesquels s'écoule le fluide est formé entre l'électrode positive et une masse, mais est également utile pour isoler l'électrode positive du système de circulation ou du système de refroidissement du fluide isolant.

Le produit sortant de la filière d'extrusion était dans le cas de la figure 1 un tube de 9 cm de diamètre extérieur, dont la paroi avait 0,5 cm d'épaisseur.

A la figure 4, on a représenté une coupe transversale d'une filière d'extrusion similaire à celle de la figure 3, si ce n'est que le poinçon constitue l'électrode positive et que l'enveloppe 11 constitue l'électrode négative.

A la figure 5; on a représenté une coupe transversale d'une filière d'extrusion d'un profilé creux de section transversale rectangulaire. Dans cette forme de réalisation, le poinçon de section transversale rectangulaire constitue l'électrode positive, tandis que l'enveloppe constitue l'électrode négative.

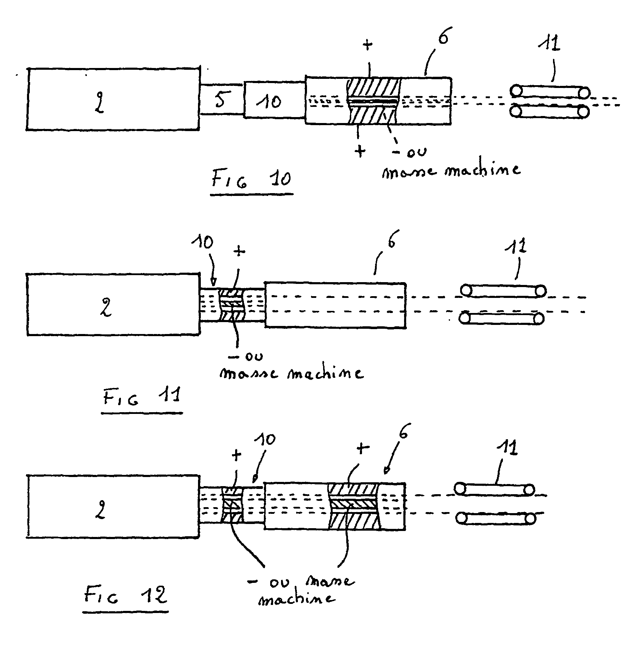

A la figure 6, on a représenté schémanquement, en coupe longitudinale, une filière d'extrusion dont l'enveloppe 11 comporte une série d'éléments distincts 12; 13 formant des électrodes positives et des électrodes négatives, une électrode positive 12 étant séparée d'une électrode négative 13 par un élément isolant. Les électrodes sont disposées perpendiculairement à l'axe de déplacement de l'extrudât, de sorte que le polymère est soumis à un champ électrique longitudinal, ou champ dont la direction est parallèle à la direction de déplacement de l'extrudât.

A la figure 7, on a représenté, partiellement en coupe, une filière dont l'enveloppe 11 comporte une série d'éléments distincts 14,15 formant des électrodes positives et des électrodes négatives, une électrode positive 14 étant séparée d'une électrode négative 15 par un élément isolant 16. Les électrodes sont placées les unes par rapport aux autres de manière à définir des champs électriques transversaux, des champs électriques dont la direction est perpendiculaire à la direction de déplacement de l'extrudât.

II est naturellement possible de créer des champs électriques qui sont constitués de l'association d'un champ électrique radial, d'un champ électrique longitudinal et/ou d'un champ électrique transversal, en positionnant de manière adéquate les électrodes. Par exemple, si le poinçon est une électrode négative, on créera dans les dispositifs des figures 6 et 7 des champs électriques radiaux et obliques, en plus des champs longitudinaux ou transversaux.

A la figure 8, on a représenté un moule 20 constitué d'une enveloppe extérieure 21 comprenant deux parties 21A,21B qui peuvent être séparées l'une de l'autre pour permettre le retrait de la pièce moulée. Un creux 23 est défini dans ladite enveloppe 21. Dans ce creux 23 s'étend un noyau, par exemple cylindrique 24, ce noyau étant fixé sur la machine d'injection. Le moule est avantageusement muni de moyen de refroidissement L'enveloppe 21 constitue par exemple une électrode positive tandis que le noyau 24 constitue une électrode négative, ou inversement

A la figure 9, on a représenté une courbe enthalpique du PET, cette courbe montrant un pic de transition vitreuse (creux) correspondant à la température de transition vitreuse du PET, un pic de cristallisation correspondant à la température de cristallisation du PET, et un pic de fusion (creux) correspondant à la température de fusion du PET.

Pour accroître la constante diélectrique du PET, il peut être utile d'ajouter au polymère cristallin ou semi-cristallin des additifs possédant des propriétés diélectriques. De tels additifs sont connus de l'homme du métier. En particulier, on utilisera du titanate de baryum et/ou du TiO₂, sous forme de poudre ou de paillettes. Par exemple, la quantité d'additif(s) possédant des propriétés diélectriques sera comprise entre 0,01 et 25%, avantageusement de 0,1 à 10% en poids du polymère cristallin ou semi-cristallin, en en particulier par rapport au poids de polymère PET.

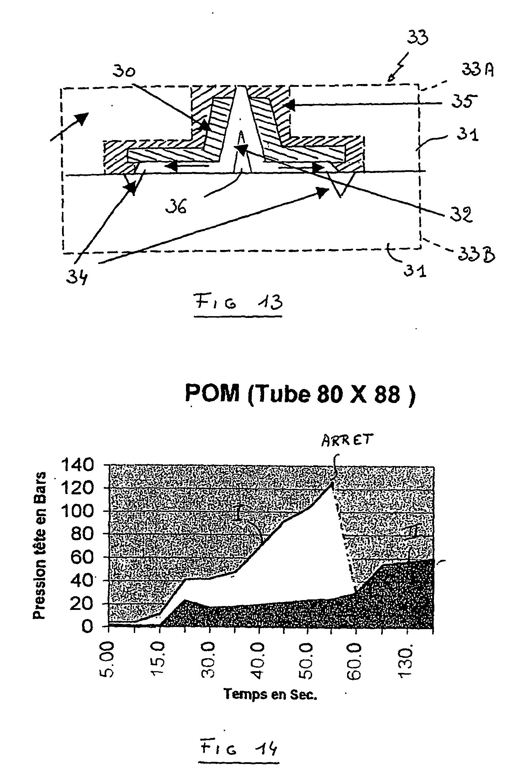

La figure 10 est une vue d'un dispositif suivant l'invention similaire à celui de la figure 1. Ce dispositif comporte:
- une extrudeuse 2 ;
- une zone adiabatique 5 ;
- une filière 10 ;
- conformateur 6 , et
- un système de traction 11 tirant le produit 7 hors du canformateur.

Dans la forme de réalisation de la figure 10, le conformateur 6 est muni de moyens pour appliquer un champ électrique statique radial. Le produit obteon présentait des caractéristiques mécaniques améliorées de 30% par rapport au produit obtenu lorsqu'aucun champ électrique était appliqué.

Dans la forme de réalisation de la figure 11, le dispositif est similaire à celui de la figure 10, si ce n'est qu'il n'y a pas de zone adiabatique 5 (le produit sortant de l'extrudeuse passe directement dans la filière 10) et qu'un champ électrique statique est appliqué sur la matière passant dans la filière 10 au lieu dans le conformateur 6. Le champ électrique est avantageusement radial. On a remarqué qu'en appliquant un champ électrique radial dans la filière, une pression de l'extrudeuse réduite était suffisante pour assurer en même débit de produit extrudé lorsqu'aucun champ électrique était appliqué. Dans le cas de polymère cristallin, on a remarqué que la pression de l'extrudeuse pouvait être réduite d'un facteur 5 à 10 lorsqu'un champ électrique radial d'au moins 5.000.000 Volts/m était appliqué, tout en maintenant un même débit qu'une extrudeuse associée à une filière pour laquelle aucun champ électrique n'est appliqué.
En appliquant un tel champ électrique dans la filière, il est donc possible d'accroître le débit de matière extrudé en utilisant la pression d'extrusion utilisée dans le cas où aucun champ électrique n'est appliqué à la filière. En contrôlant la force du champ électrique radial et/ou en contrôlant la pression de l'extrudeuse, il est donc possible de contrôler le débit de matière extrudée.

Enfin, le dispositif de la figure 12 est similaire à celui de la figure 11, si ce n'est qu'un champ électrique radial est appliqué au conformateur 6. Ce dispositif permet d'une part d'accroître la production d'une extrudeuse existante et d'autre part d'améliorer les propriétés mécaniques du produit extrudé.

La figure 13 montre schématiquement une disposition possible d'électrodes (électrode positive 30, électrode négative ou masse 31) dans un canal d'injection 32 d'un moule 33, comportant par exemple une partie fixe 33A par rapport à la tête d'un injecteur et une partie mobile 33B apte à subir un mouvement relatif par rapport à la partie 33A pour permettre l'enlèvement du produit moulé dans l'empreinte ou les empreintes 34. Le canal d'injection 32 présente un doigt ou des moyens 36 pour répartir l'écoulement du polymère vers les différentes empreintes 34 du moule ou en plusieurs endroits de l'empreinte ou des empreintes du moule. La partie fixe du moule présente une électrode positive 30 qui est isolée par une couche isolante 35 du bâti 33Al de la partie 33A. Le bâti 33Al est relié à la masse de l'injecteur. La partie mobile 33B est agencée pour être reliée à la masse de l'injecteur, au moins lorsque la partie 33B appuie contre la partie 33A (moule en position fermée). La partie mobile 33B forme donc également une masse au moins en position fermée du moule 33. Dans la forme représentée, le doigt ou moyen 36 est porté par la partie 33B. La couche isolante 35 assure également une isolation entre l'électrode positive et la tête de l'injecteur. Si la tête de l'injecteur est pourvue d'une électrode positive, l'électrode positive du moule est avantageusement reliée à l'électrode positive de l'injecteur, l'électrode positive de l'injecteur étant alors isolée du bâti 33A1.

Lors d'une injection, la matière en fusion s'écoule dans les canaux d'injection 32, et en particulier entre l'électrode positive et le moyen 36 et une face de la partie 33B. La matière est ainsi soumise à un champ perpendiculaire à la direction d'écoulement de la matière dans la partie 33A.

Au cas où la.partie 33A est munie de canaux de refroidissement, ces canaux seront agencés le long de la face de l'électrode positive non en contact avec la matière à injecter, le fluide de refroidissement étant alors un fluide isolant électrique, en particulier une huile de refroidissement isolant électrique, ou une huile diélectrique.

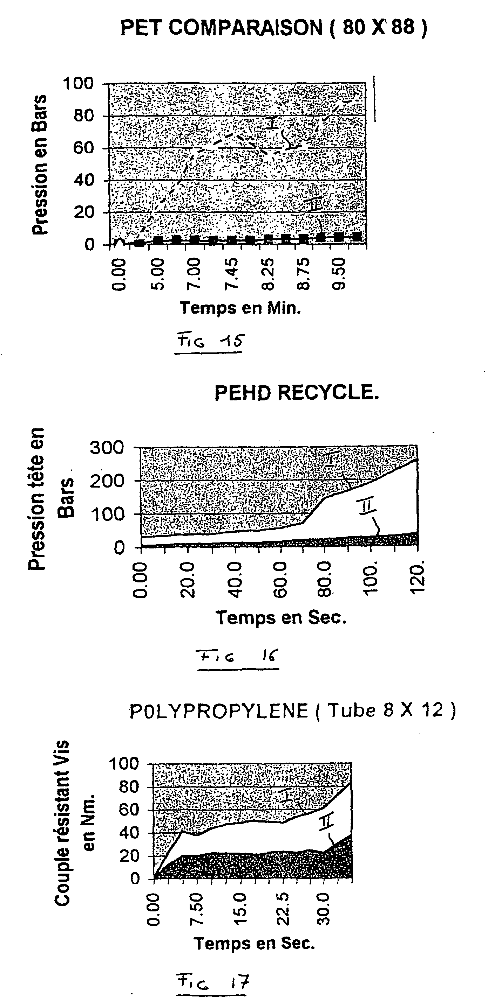

La figure 14 montre les pressions exercées par la vis d'une extrudeuse poussant du polyoxyméthlylène (polymère cristallin) dans un dispositif de mise en forme polarisé [champ. radial appliqué sur la matière depuis l'introduction de matière dans le dispositif (température proche de la température de fusion) jusqu'à sa sortie du dispositif à une température proche de la température de transition vitreuse] et dans le dispositif de mise en forme sans polarisation depuis l'introduction de la matière à une température proche de la température de fusion.
Il ressort de cette figure, que lors d'une non polarisation (courbe I) du dispositif de mise en forme, l'écoulement est dans un premier temps adiabatique (+/- 15 secondes), ensuite on observe un front ou accroissement brutal de la pression (dû au pic de cristallisation du polymère). Par après on observe un palier de pression jusqu'à un temps de 30 secondes après l'introduction de la matière. La pression continue ensuite à s'accroître jusqu'à la pression maximale admissible du dispositif de mise en forme et de l'extrudeuse (120 bars). Dû au refroidissement de la matière, un bouchon de matière s'est formé dans le dispositif de mise en forme et une pression de 120 bars était insuffisante pour faire sortir la matière hors du dispositif de mise en forme.

Lorsqu'on vient à polariser le dispositif de mise en forme (champ électrique radial de 5.000.000 Volts/m appliqué sur la matière), on observe (courbe II) juste après l'entrée de matière dans le dispositif de mise en forme, une pression inférieure à celle lors de la non application du champ électrique, suivi par un palier à 20 bars jusqu'à 60 secondes (temps mesuré à partir de l'introduction de matière). On observe ensuite un accroissement brutal de la pression dû à la chute de température de la matière dans le dispositif de mise en forme suivi d'un palier de pression à environ 60 bars. La matière mise en forme sort du dispositif avec une pression d'environ 60 bars.

Cette figure montre donc qu'en appliquant un champ électrique dans le dispositif de mise en forme, il est possible de réduire de manière important la pression maximale nécessaire à exercer pour forcer la matière à passer au travers du dispositif de mise en forme.

La figure 15 est une figure similaire à celle de la figure 14, mais montrant l'effet d'un champ électrique dans le dispositif de mise en forme pour le PET. Il ressort de cette figure, qu'en appliquant un champ électrique (courbe II), la pression maximale pour faire passer la matière à travers le dispositif est réduite. La courbe I montre la pression nécessaire lorsqu'aucun champ électrique n'est appliqué.

Enfin les figures 16 et 17 sont des figures similaires à celle de la figure 14, mais appliqué respectivement au polyéthylène haute densité recyclé et au polypropylène. Cette figure montre encore qu'en appliquant un champ électrique (radial dans cet exemple - courbe II), il est possible de réduire la pression maximale nécessaire au passage de la matière dans le dispositif de mise en forme. La courbe I montre la pression nécessaire lorsqu'aucun champ électrique n'est appliqué.

Une telle réduction de la pression montre qu'en appliquant un champ électrique, on réduit de manière sensible le frottement de la matière sur les ou des parois du dispositif de mise en forme. Cette moindre friction permet, soit d'accroître la production, soit de réduire l'usure de l'extrudeuse et/ou du dispositif de mise en forme, de réduire des accidents dus à des blocages accidentels de matière dans le dispositif de mise en forme, etc.

On a également préparé des éprouvettes en PET, en POM et en PE haute densité en appliquant un champ électrique radial de 5.000.000 volts/m dans le dispositif de mise en forme, et d'autres éprouvettes dans le dispositif de mise en forme sans application d'un champ électrique. On a ainsi observé une résistance à la traction sensiblement égale pour les éprouvettes avec champ électrique et pour les éprouvettes sans champ électrique. Toutefois en ce qui concerne le module d'élasticité, on a observé que les éprouvettes en POM et en PET avaient un module d'élasticité environ 60% supérieur lors de l'application d'un champ électrique par rapport au module de l'échantillon préparé en l'absence de champ électrique. En cas de recuit des éprouvettes préparées avec un champ électrique (recuit opéré pendant 48 heures à une température supérieure de 20°C à la température de transition vitreuse), les éprouvettes préparées avec champ électrique et recuit avait encore un module d'élasticité environ 20 à 30% supérieur au module d'élasticité des éprouvettes non préparées avec un champ électrique et recuites.

Le tableau suivant donne le module d'élasticité de Young (exprimé en MPa) pour une éprouvette moulée sans champ électrique (A), une éprouvette moulée sans champ électrique mais avec recuit (B), et une éprouvette préparée avec champ électrique.

| éprouvette | Module MPa | Rapport Module éprouvette X/⁻éprouvette C |
|---|---|---|
| A | 1297 | 1,61 |
| B | 1725 | 1,33 |
| C | 2088 | 1 |

Le procédé suivant l'invention peut être utilisé pour la fabrication de pièces diverses, telles que des pièces moulées, des pièces extrudées, des plaques, des rails, des cornières, des feuilles, des goulottes (par exemple de câble), des profilés en T, en U, en I, en L, en X, etc.

## Revendications

1. Procédé de transformation de matières thermoplastiques présentant une température de fusion et une température de solidification,
- dans lequel on chauffe la matière thermoplastique à une température supérieure à la température de fusion,
- dans lequel on transforme ladite matière chauffée dans un dispositif de mise en forme en y abaissant la température de la matière thennoplastique d'une température au moins proche de la température de fusion jusqu'à une température inférieure à la température de solidification, et
dans lequel on soumet la matière thermoplastique avant son passage dans le dispositif de mise en forme à un champ électrique statique
ledit procédé étant **caractérisé en ce qu'**on soumet la matière thermoplastique avant et/ou pendant son passage dans le dispositif de mise en forme, au champ électrique statique entre, d'une part, une électrode positive en contact avec la matière thermoplastique et, d'autre part, une électrode négative ou masse en contact avec la matière thermoplastique.

2. Procédé suivant la revendication 1, dans lequel on soumet la matière thermoplastique avant et/ou pendant son passage dans le dispositif de mise en forme, à un champ électrique statique d'au moins 800.000V/m, de préférence d'au moins 1.000.000 V/m, entre, d'une part, une électrode positive en contact avec la matière thermoplastique et, d'autre part, une électrode négative ou masse en contact avec la matière thermoplastique.

3. Procédé suivant la revendication 1 ou 2, dans lequel la matière thermoplastique se déplace avant et/ou pendant son passage dans le dispositif de mise en forme, entre une électrode positive et une électrode négative en contact avec la matière thermoplastique, ledit champ étant sensiblement perpendiculaire à l'écoulement de la matière entre, d'une part, une électrode positive en contact avec la matière thermoplastique et, d'autre part, une électrode négative ou masse en contact avec la matière thermoplastique.

4. Procédé suivant l'une quelconque des revendications 1 à 3, **caractérisé en ce qu'**on crée un effet d'électrostriction dans la matière thermoplastique entre l'électrode positive et l'électrode négative ou masse.

5. Procédé de transformation suivant l'une quelconque des revendications 1 à 4, dans lequel on transforme une matière thermoplastique contenant au moins un polymère ou copolymère cristallin ou semi-cristallin présentant une température de fusion, une température de cristallisation inférieure à la température de fusion et une température de transition vitreuse, ledit polymère ou copolymère présentant de préférence sensiblement uniquement des cristaux solides en dessous de la température de cristallisation,
- dans lequel on chauffe la matière à une température supérieure à la température de fusion du polymère ou copolymère cristallin ou semi-cristallin, et
- dans lequel on transforme ladite matière chauffée dans un dispositif de mise en forme en y abaissant la température de la matière d'une température supérieure à la température de cristallisatioa jusqu'à une température inférieure à la température de transition vitreuse du polymère ou copolymère cristallin ou semi-cristallin,
ledit procédé étant **caractérisé en ce qu'**au moins pour une température ou plage de température supérieure à la température de transition vitreuse, de préférence supérieurs à la température de cristallisation, on soumet la matière à un champ électrique statique.

6. Procédé suivant la revendication 5, **caractérisé en ce qu'**au moins lors de l'abaissement de la température d'une température supérieure à la température de cristallisation jusqu'à une température comprise entre la température de transition vitreuse et la température de cristallisation, on soumet la matière à un champ électrique.

7. Procédé suivant la revendication 5, **caractérisé en ce qu'**au moins lors de l'abaissement de la température d'une température supérieure à la température de cristallisation ou proche de la température de cristallisation jusqu'à une température proche de la température de transition vitreuse, on soumet la matière à un champ électrique statique.

8. Procédé suivant l'une quelconque des revendications 5 à 7, **caractérisé en ce qu'**au moins pour une température proche de la température de fusion, on soumet la matière à un champ électrique statique.

9. Procédé suivant la revendication 8, **caractérisé en ce qu'**au moins pour une température proche de la température de fusion, ainsi que pour une plage de température comprise entre une température supérieure à la température de cristallisation et une température comprise entre la température de cristallisation et la température de transition vitreuse, on soumet la matière à un champ électrique statique.

10. Procédé suivant l'une quelconque des revendications précédentes, **caractérisé** en ce le champ électrique a une intensité d'au moins 1.000.000 Volts/m, de préférence d'au moins 2.000.000Volts/m.

11. Procédé suivant l'une quelconque des revendications précédentes, **caractérisé en ce qu'**on soumet la matière à un champ électrique au moins radial ou perpendiculaire à la direction d'écoulement de la matière.

12. Procédé suivant l'une quelconque des revendications précédentes, **caractérisé en ce que** la matière contient au moins un additif pour accroître le caractère diélectrique.

13. Procédé suivant l'une quelconque des revendications précédentes, **caractérisé en ce que** la matière est un PET, éventuellement chargé.

14. Procédé suivant l'une quelconque des revendications précédentes, **caractérisé en ce que** le dispositif de mise en forme est un conformateur d'une extrudeuse ou un moule et/ou **en ce que** le champ électrique est appliqué dans une filière d'une extrudeuse.

15. Procédé suivant la revendication 14, **caractérisé en ce que** la filière ou dispositif de mise en forme comporte un poinçon destiné à former la forme intérieure de l'extrudât ou produit extrudé et une paroi destinée à former la forme extérieure de l'extrudât ou produit extrudé, et **en ce qu'**on crée un champ électrique radial entre le poinçon et la paroi destinée à former la forme extérieure de l'extrudât ou produit extrudé, le poinçon constituant avantageusement une électrode négative ou la masse, tandis que la paroi constitue avantageusement une électrode positive.

16. Procédé suivant l'une des revendications 1 à 15, **caractérisé en ce qu'**on utilise un fluide isolant électrique pour refroidir l'électrode positive.

17. Produit réalisé en un polymère ou copolymère cristallin ou semi-cristallin obtenu par le procédé selon l'une quelconque des revendications 5 à 15.

18. Dispositif pour donner une forme à une matière thermoplastique selon un procédé selon l'une quelconque des revendications 1 à 16, ledit dispositif comprenant :
- une filière on une chambre de mise en forme présentant un passage pour l'introduction de la matière thermoplastique, ladite chambre ou filière présentant une ou des parois en contact avec la matière thermoplastique ;
- un moyen de refroidissement pour refroidir au moins partiellement une ou des parois ; et
un moyen pour créer un champ électrique statique dans le dispositif de mise en forme, **caractérisé en ce que** le dispositif comporte
un moyen pour relier au moins une paroi ou partie de paroi de la chambre où filière en contact avec la matière thermoplastique avec une source électrique pour créer un champ électrique statique entre au moins cette paroi ou partie de paroi et une autre paroi ou partie de paroi de la chambre ou filière.

19. Dispositif suivant la revendication 18, **caractérisé en ce qu'**il comporte un premier moyen pour relier une première paroi ou partie de paroi à un pôle d'une source électrique, et un deuxième moyen pour relier une autre paroi ou partie de paroi à un autre pôle de la source électrique ou à la masse, de manière à ce que la première paroi ou partie de paroi forme une électrode positive.

20. Dispositif suivant la revendication 18 ou 19, **caractérisé en ce qu'**il comporte ou est associé à un moyen pour créer un champ électrique statique entre une électrode positive et une électrode négative ou masse en contact avec la matière thermoplastique, ledit moyen créant entre lesdites électrodes ou entre l'électrode positive et la masse un champ électrique statique d'au moins 800.000V/m, de préférence d'au moins 1.000.000 V/m.

21. Dispositif suivant l'une des revendications 18 à 20, **caractérisé en ce que** les électrodes positive(s) et négative(s) ou masse forment des parois d'un canal dans lequel se déplace dans une direction la matière thermoplastique, lesdites électrodes ou masse étant agencées pour créer un champ électrique statique sensiblement perpendiculaire à la direction d'écoulement de la matière dans le canal.

22. Dispositif de mise en forme suivant la revendication 18, **caractérisé en ce qu'**il comporte une filière associée à une chambre de mise en forme, et des moyens pour connecter une ou des parois de la filière et de la chambre de mise en forme à au moins une source électrique, pour créer un champ électrique statique dans la filière et un champ électrique statique dans la chambre de mise en forme.

23. Dispositif de mise en forme suivant l'une des revendications 18 à 22, **caractérisé en ce que** la chambre de mise en forme est un conformateur relié à une filière d'extrusion.

24. Dispositif suivant l'une quelconque des revendications 18 à 23, **caractérisé en ce que** les parois ou parties de paroi entre lesquelles un champ électrique statique est créé sont disposées pour créer un champ électrique radial.

25. Dispositif suivant l'une quelconque des revendications 18 à 24, **caractérisé en ce que** le moyen pour créer un champ électrique est agencé par rapport au moyen de refroidissement pour créer un champ électrique au moins dans une zone de la chambre de mise en forme dans laquelle la matière passe d'une température supérieure à la température de cristallisation ou proche de la température de cristallisation à une température inférieure à la température de cristallisation, de préférence proche ou sensiblement égale à la température de transition vitreuse.

26. Dispositif suivant l'une quelconque des revendications 18 à 25, **caractérisé en ce qu'**il comporte un poinçon destiné à former la forme intérieure du produit formé dans la chambre de mise en forme, cette dernière présentant une paroi destinée à former la forme extérieure du produit, et **en ce que** le poinçon et la paroi destinée à former la forme extérieure du produit constituent des électrodes ou une électrode et une masse pour créer un champ électrique radial, le poinçon constituant avantageusement une électrode négative ou la masse, tandis que la paroi constitue avantageusement une électrode positive.

27. Dispositif suivant l'une quelconque des revendications 18 à 26, **caractérisé en ce qu'**il comporte une électrode positive et une électrode négative agencées pour former entre elles un champ électrique et constituant des parois de la chambre de mise en forme en contact avec la matière thermoplastique, l'électrode positive étant avantageusement réalisée en alliage d'aluminium, la face de contact de l'électrode avec la matière thermoplastique étant de préférence munie d'une couche d'alumine d'au moins 25µm d'épaisseur.

28. Dispositif suivant l'une des revendications 18 à 27, **caractérisé en ce que** les parois du dispositif de mise en forme ou du conformateur et/ou de la filière en contact avec la matière sont munies d'alumine, en particulier sont recouvertes d'une couche contenant de l'alumine.

29. Dispositif suivant l'une des revendications 18 à 28, **caractérisé en ce que** la chambre de mise en forme est un moule.

30. Dispositif suivant l'une des revendications 18 à 29, **caractérisé en ce qu'**un ou des moyens isolants s'étendent entre l'électrode positive ou reliée au pôle positif d'une source de courant, et la masse ou l'électrode négative ou reliée au pôle négatif d'une source de courant, un moyen isolant étant avantageusement formé par une couche d'un fluide ou liquide isolant ou diélectrique.

31. Dispositif suivant la revendication 30, **caractérisé en ce qu'**il présente une chambre en contact avec l'électrode positive, dans laquelle se trouve le liquide ou fluide isolant, et **en ce qu'**il présente des passages communiquant avec ladite chambre, lesdits passages étant munis d'un moyen pour relier la chambre à un système de circulation de liquide ou fluide isolant, ce système comportant avantageusement un système de refroidissement.

32. Dispositif suivant l'une des revendications 18 à 31, **caractérisé en ce que** la longueur de l'électrode positive ou des électrodes positives en contact avec la matière, longueur calculée dans le sens d'avancement de la matière dans la chambre de mise en forme ou filière, est supérieure à 5 cm, avantageusement supérieure à 10cm, de préférence supérieure à 20cm.

## Patentansprüche

1. Verfahren zur Umformung von thermoplastischen Materialien, die eine Schmelztemperatur und eine Erstarrungstemperatur aufweisen, bei dem das thermoplastische Material auf eine Temperatur über der Schmelztemperatur erwärmt wird,
bei dem das erwärmte Material in einer Formgebungsvorrichtung umgeformt wird, indem die Temperatur des thermoplastischen Materials auf eine Temperatur mindestens nahe der Schmelztemperatur bis auf eine Temperatur unter der Erstarrungstemperatur gesenkt wird, und
bei dem das thermoplastische Material vor seinem Durchlauf in der Formgebungsvorrichtung einem elektrostatischen Feld ausgesetzt wird,
wobei das Verfahren **dadurch gekennzeichnet ist, dass** das thermoplastische Material vor und/oder während seinem Durchlauf in der Formgebungsvorrichtung zwischen einerseits einer positiven Elektrode in Kontakt mit dem thermoplastischen Material und andererseits einer negativen Elektrode oder Masse in Kontakt mit dem thermoplastischen Material dem elektrostatischen Feld ausgesetzt wird.

2. Verfahren nach Anspruch 1, bei dem das thermoplastische Material vor und/oder während seinem Durchlauf in der Formgebungsvorrichtung zwischen einerseits einer positiven Elektrode in Kontakt mit dem thermoplastischen Material und andererseits einer negativen Elektrode oder Masse in Kontakt mit dem thermoplastischen Material einem elektrostatischen Feld von mindestens 800.000 V/m, bevorzugt mindestens 1.000.000 V/m ausgesetzt wird.

3. Verfahren nach Anspruch 1 oder 2, bei dem das thermoplastische Material sich vor und/oder während seinem Durchlauf in der Formgebungsvorrichtung zwischen einer positiven Elektrode und einer negativen Elektrode in Kontakt mit dem thermoplastischen Material verlagert, wobei das Feld im Wesentlichen senkrecht zum Materialfluss zwischen einerseits einer positiven Elektrode in Kontakt mit dem thermoplastischen Material und andererseits einer negativen Elektrode oder Masse in Kontakt mit dem thermoplastischen Material liegt.

4. Verfahren nach einem der Ansprüche 1 bis 3, **dadurch gekennzeichnet, dass** ein Elektrostriktionseffekt im thermoplastischen Material zwischen der positiven Elektrode und der negativen Elektrode oder Masse auftritt.

5. Verfahren zur Umformung nach einem der Ansprüche 1 bis 4, bei dem ein thermoplastisches Material umgeformt wird, das mindestens ein kristallines oder semikristallines Polymer oder Copolymer enthält, das eine Schmelztemperatur aufweist, eine Kristallisationstemperatur unter der Schmelztemperatur und eine Glasübergangstemperatur, wobei das Polymer oder Copolymer bevorzugt im Wesentlichen einzig feste Kristalle unter der Kristallisationstemperatur aufweist,
bei dem das Material auf eine Temperatur über der Schmelztemperatur des kristallinen oder semikristallinen Polymers oder Copolymers erwärmt wird, und
bei dem das erwärmte Material in einer Formgebungsvorrichtung umgeformt wird, indem die Temperatur des Materials von einer Temperatur über der Kristallisationstemperatur bis auf eine Temperatur unter der Glasübergangstemperatur des kristallinen oder semikristallinen Polymers oder Copolymers gesenkt wird,
wobei das Verfahren **dadurch gekennzeichnet ist, dass** mindestens für eine Temperatur oder einen Temperaturbereich über der Glasübergangstemperatur, bevorzugt über der Kristaltisatiönstemperatur, das Material einem elektrostatischen Feld ausgesetzt wird.

6. Verfahren nach Anspruch 5, **dadurch gekennzeichnet, dass** mindestens beim Absenken der Temperatur von einer Temperatur über der Kristallisationstemperatur bis auf eine Temperatur zwischen der Glasübergangstemperatur und der Kristallisationstemperatur, das Material einem elektrostatischen Feld ausgesetzt wird.

7. Verfahren nach Anspruch 5, **dadurch gekennzeichnet, dass** mindestens beim Absenken der Temperatur von einer Temperatur über der Kristallisationstemperatur oder nahe der Kristallisationstemperatur bis auf eine Temperatur nahe der Glasübergangstemperatur, das Material einem elektrostatischen Feld ausgesetzt wird.

8. Verfahren nach einem der Ansprüche 5 bis 7, **dadurch gekennzeichnet, dass** mindestens für eine Temperatur nahe der Schmelztemperatur, das Material einem elektrostatischen Feld ausgesetzt wird.

9. Verfahren nach Anspruch 8, **dadurch gekennzeichnet, dass** mindestens für eine Temperatur nahe der Schmelztemperatur sowie für einen Temperaturbereich zwischen einer Temperatur über der Kristallisationstemperatur und einer Temperatur zwischen der Kristallisationstemperatur und der Glasübergangstemperatur, das Material einem elektrostatischen Feld ausgesetzt wird.

10. Verfahren nach einem der vorhergehenden Ansprüche, **dadurch gekennzeichnet, dass** das elektrische Feld eine Intensität von mindestens 1.000.000 Volt/m, bevorzugt von mindestens 2.000.000 Volt/m aufweist.

11. Verfahren nach einem der vorhergehenden Ansprüche, **dadurch gekennzeichnet, dass** das Material mindestens radial oder senkrecht zur Flussrichtung des Materials einem elektrischen Feld ausgesetzt wird.

12. Verfahren nach einem der vorhergehenden Ansprüche, **dadurch gekennzeichnet, dass** das Material mindestens ein Additiv zur Verbesserung der dielektrischen Eigenschaften enthält.

13. Verfahren nach einem der vorhergehenden Ansprüche, **dadurch gekennzeichnet, dass** das Material ein PET ist, eventuell geladen.

14. Verfahren nach einem der vorhergehenden Ansprüche, **dadurch gekennzeichnet, dass** die Formgebungsvorrichtung eine Abkühlvorrichtung eines Extruders oder eine Gussform ist und/oder dadurch, dass das elektrische Feld in der Düse eines Extruders angewendet wird.

15. Verfahren nach Anspruch 14, **dadurch gekennzeichnet, dass** die Düse oder die Formgebungsvorrichtung einen Stempel umfasst, der dazu vorgesehen ist, die innere Form des Extrudats oder extrudierten Produkts zu formen, und eine Wand, die dazu vorgesehen ist, die äußere Form des Extrudats oder extrudierten Produkts zu formen, und dadurch, dass ein elektrisches Feld radial zwischen dem Stempel und der Wand erzeugt wird, die dazu vorgesehen ist, die äußere Form des Extrudats oder extrudierten Produkts zu formen, wobei der Stempel mit Vorteil eine negative Elektrode oder Masse bildet, während die Wand mit Vorteil eine positive Elektrode bildet.

16. Verfahren nach einem der Ansprüche 1 bis 15, **dadurch gekennzeichnet, dass** ein elektrisch isolierendes Fluid zum Abkühlen der positiven Elektrode verwendet wird.

17. Produkt gebildet aus einem kristallinen oder semikristallinen Polymer oder Copolymer erhalten durch das Verfahren nach einem der Ansprüche 5 bis 15.

18. Vorrichtung zur Formgebung eines thermoplastischen Materials nach einem Verfahren nach einem der Ansprüche 1 bis 16, wobei die Vorrichtung umfasst:
eine Düse oder eine Formgebungskammer, die einen Durchgang zum Einführen des thermoplastischen Materials aufweist, wobei die Kammer oder Düse eine oder mehrere Wände in Kontakt mit dem thermoplastischen Material aufweist;
ein Abkühlmittel zum mindestens teilweisen Abkühlen einer oder mehrerer Wände; und
ein Mittel zum Erzeugen eines elektrostatischen Feldes in der Formgebungsvorrichtung,
**dadurch gekennzeichnet, dass** die Vorrichtung umfasst: ein Mittel zum Verbinden mindestens einer Wand oder eines Teils der Wand der Kammer oder Düse in Kontakt mit dem thermoplastischen Material mit einer Elektrizitätsquelle zum Erzeugen eines elektrostatischen Feldes zwischen mindestens dieser Wand oder Teils der Wand und einer anderen Wand oder Teils der Wand der Kammer oder Düse.

19. Vorrichtung nach Anspruch 18, **dadurch gekennzeichnet, dass** sie ein erstes Mittel zum Verbinden mindestens einer ersten Wand oder eines Teils der Wand mit einem Pol einer Elektrizitätsquelle umfasst und ein zweites Mittel zum Verbinden einer anderen Wand oder eines Teils der Wand mit einem anderen Pol der Elektrizitätsquelle oder der Masse derart, dass die erste Wand oder Teil der Wand eine positive Elektrode bildet.

20. Vorrichtung nach Anspruch 18 oder 19, **dadurch gekennzeichnet, dass** sie ein Mittel zum Erzeugen eines elektrostatischen Feldes zwischen einer positiven Elektrode und einer negativen Elektrode oder Masse in Kontakt mit dem thermoplastischen Material umfasst oder diesem zugeordnet ist, wobei das Mittel zwischen den Elektroden oder zwischen der positiven Elektrode und der Masse ein elektrostatisches Feld von mindestens 800.000 V/m, bevorzugt mindestens 1.000.000 V/m erzeugt.

21. Vorrichtung nach einem der Ansprüche 18 bis 20, **dadurch gekennzeichnet, dass** die positive(n) Elektrode(n) und negative(n) Elektrode(n) oder Masse Wände eines Kanals bilden, in dem sich in eine Richtung das thermoplastische Material verlagert, wobei die Elektroden oder Masse angeordnet sind, um ein elektrostatisches Feld im Wesentlichen senkrecht zur Flussrichtung des Materials im Kanal zu erzeugen.

22. Vorrichtung zur Formgebung nach Anspruch 18, **dadurch gekennzeichnet, dass** sie eine Düse umfasst, die einer Umformungskammer zugeordnet ist, und Mittel zum Anschließen einer oder mehrerer Wände der Düse und der Umformungskammer an mindestens einer Elektrizitätsquelle, um ein elektrostatisches Feld in der Düse und ein elektrostatisches Feld in der Umformungskammer zu erzeugen.

23. Vorrichtung zur Formgebung nach einem der Ansprüche 18 bis 22, **dadurch gekennzeichnet, dass** die Umformungskammer eine mit einer Extrusionsdüse verbundene Abkühlvorrichtung ist.

24. Vorrichtung nach einem der Ansprüche 18 bis 23, **dadurch gekennzeichnet, dass** die Wände oder Teile der Wände, zwischen denen ein elektrostatisches Feld erzeugt wird, so angeordnet sind, dass ein radiales elektrisches Feld erzeugt wird.

25. Vorrichtung nach einem der Ansprüche 18 bis 24, **dadurch gekennzeichnet, dass** das Mittel zum Erzeugen eines elektrischen Feldes in Bezug auf das Abkühlmittel angeordnet ist, um ein elektrisches Feld mindestens in einer Zone der Umformungskammer zu erzeugen, in der das Material von einer Temperatur über der Kristallisationstemperatur oder nahe der Kristallisationstemperatur auf eine Temperatur unter der Kristallisationstemperatur, bevorzugt nahe zu oder im Wesentlichen gleich der Glasübergangstemperatur durchläuft.

26. Vorrichtung nach einem der Ansprüche 18 bis 25, **dadurch gekennzeichnet, dass** sie einen Stempel umfasst, der dazu vorgesehen ist, die innere Form des Produkts zu formen, das in der Umformungskammer geformt wird, wobei diese eine Wand aufweist, die dazu vorgesehen ist, die äußere Form des Produkts zu formen, und dadurch, dass der Stempel und die Wand, die dazu vorgesehen ist, die äußere Form des Produkts zu formen, Elektroden bilden oder eine Elektrode und eine Masse zum Erzeugen eines radialen elektrischen Feldes, wobei der Stempel mit Vorteil eine negative Elektrode oder die Masse bildet, während die Wand mit Vorteil eine positive Elektrode bildet.

27. Vorrichtung nach einem der Ansprüche 18 bis 26, **dadurch gekennzeichnet, dass** sie eine positive Elektrode und eine negative Elektrode umfasst, die angeordnet sind, um dazwischen ein elektrisches Feld auszubilden und Wände der Umformungskammer in Kontakt mit dem thermoplastischen Material bilden, wobei die positive Elektrode mit Vorteil aus Aluminiumlegierung hergestellt ist, wobei die Kontaktfläche der Elektrode mit dem thermoplastischen Material bevorzugt mit einer Aluminiumoxidschicht von mindestens 25 µm Dicke ausgerüstet ist.

28. Vorrichtung nach einem der Ansprüche 18 bis 27, **dadurch gekennzeichnet, dass** die Wände der Umformungsvorrichtung oder der Abkühlvorrichtung und/oder der Düse in Kontakt mit dem Material mit Aluminiumoxid ausgerüstet sind, insbesondere mit einer Schicht überzogen sind, die Aluminiumoxid enthält.

29. Vorrichtung nach einem der Ansprüche 18 bis 28, **dadurch gekennzeichnet, dass** die Umformungskammer eine Gussform ist.

30. Vorrichtung nach einem der Ansprüche 18 bis 29, **dadurch gekennzeichnet, dass** ein oder mehrere Isoliermittel sich zwischen der positiven Elektrode oder mit dem positiven Pol einer Stromquelle verbunden und der Masse oder negativen Elektrode oder mit dem negativen Pol einer Stromquelle verbunden erstrecken, wobei ein Isoliermittel mit Vorteil durch eine Schicht eines isolierenden oder dielektrischen Fluids oder einer Flüssigkeit gebildet ist.

31. Vorrichtung nach Anspruch 30, **dadurch gekennzeichnet, dass** sie eine Kammer in Kontakt mit der positiven Elektrode aufweist, in der sich isolierende Flüssigkeit oder Fluid befindet, und dadurch, dass sie Durchgänge in Verbindung mit der Kammer aufweist, wobei die Durchgänge mit einem Mittel versehen sind, um die Kammer mit einem Zirkulationssystem für isolierende Flüssigkeit oder Fluid zu verbinden, wobei das System mit Vorteil ein Abkühlsystem umfasst.

32. Vorrichtung nach einem der Ansprüche 18 bis 31, **dadurch gekennzeichnet, dass** die Länge der positiven Elektrode oder der positiven Elektroden in Kontakt mit dem Material, Länge berechnet in Vorschubrichtung des Materials in der Umformungskammer oder Düse, über 5 cm beträgt, mit Vorteil mehr als 10 cm, insbesondere mehr als 20 cm.

## Claims

1. Method for processing thermoplastic materials having a melting temperature and a solidification temperature,
- in which the thermoplastic material is heated to a temperature higher than the melting temperature,
- in which said heated material is processed in a forming device by lowering therein the temperature of the thermoplastic material from a temperature which is at least close to the melting temperature to a temperature which is lower than the solidification temperature, and in which the thermoplastic material is subjected before its passage into the forming device to a static electric field
said process being **characterized in that** the thermoplastic material is subjected, before and/or during its passage into the forming device, to a static electric field between, on the one hand, a positive electrode in contact with the thermoplastic material and, on the other hand, a negative or ground electrode in contact with the thermoplastic material.

2. Method according to claim 1, in which the thermoplastic material is subjected, before and/or during its passage into the forming device, to a static electric field of at least 800,000 V/m, preferably of at least 1,000,000 V/m, between, on the one hand, a positive electrode in contact with the thermoplastic material and, on the other hand, a negative or ground electrode in contact with the thermoplastic material.

3. Method according to claim 1 or 2, in which the thermoplastic material moves, before and/or during its passage into the forming device, between a positive electrode and a negative electrode in contact with the thermoplastic material, said field being approximately perpendicular to the flow of the material between, on the one hand, a positive electrode in contact with the thermoplastic material and, on the other hand, a negative or ground electrode in contact with the thermoplastic material.

4. Method according to any one of claims 1 to 3, **characterized in that** an electrostriction effect is created in the thermoplastic material between the positive electrode and the negative or ground electrode.

5. Processing method according to any one of claims 1 to 4, in which a thermoplastic material is processed containing at least one crystalline or semicrystalline polymer or copolymer having a melting temperature, a crystallization temperature lower than the melting temperature and a glass transition temperature, said polymer or copolymer preferably having approximately only solid crystals below the crystallization temperature,
- in which the material is heated to a temperature higher than the melting temperature of the crystalline or semi-crystalline polymer or copolymer, and
- in which said heated material is processed in a forming device by lowering therein the temperature of the material from a temperature higher than the crystallization temperature to a temperature lower than the glass transition temperature of the crystalline or semicrystalline polymer or copolymer,
said method being **characterized in that** at least for a temperature or temperature range higher than the glass transition temperature, preferably higher than the crystallization temperature, the material is subjected to a static electric field.

6. Method according to claim 5, **characterized in that**, at least when lowering the temperature from a temperature higher than the crystallization temperature to a temperature comprised between the glass transition temperature and the crystallization temperature, the material is subjected to an electric field.

7. Method according to claim 5, **characterized in that** at least when lowering the temperature from a temperature higher than the crystallization temperature or close to the crystallization temperature to a temperature close to the glass transition temperature, the material is subjected to a static electric field.

8. Method according to any one of claims 5 to 7, **characterized in that** at least for a temperature close to the melting temperature, the material is subjected to a static electric field.

9. Method according to claim 8, **characterized in that** at least for a temperature close to the melting temperature, as well as for a temperature range comprised between a temperature higher than the crystallization temperature and a temperature comprised between the crystallization temperature and the glass transition temperature, the material is subjected to a static electric field.

10. Method according to any one of the preceding claims, **characterized in that** the electric field has an intensity of at least 1,000,000 Volts/m, preferably of at least 2,000,000 Volts/m.

11. Method according to any one of the preceding claims, **characterized in that** the material is subjected to an electric field which is at least radial or perpendicular to the direction of flow of the material.

12. Method according to any one of the preceding claims, **characterized in that** the material contains at least one additive to increase the dielectric character.

13. Method according to any one of the preceding claims, **characterized in that** the material is a PET, optionally with fillers.

14. Method according to any one of the preceding claims, **characterized in that** the forming device is a shaping fixture of an extruder or a mould and/or **in that** the electric field is applied in a die of an extruder.

15. Method according to claim 14, **characterized in that** the die or forming device comprises a mandrel rod intended to form the inner shape of the extrudate or extruded product and a wall intended to form the outer shape of the extrudate or extruded form, and **in that** a radial electric field is created between the mandrel rod and the wall intended to form the outer shape of the extrudate or extruded product, the mandrel rod advantageously constituting a negative electrode or the ground electrode, while the wall advantageously constitutes a positive electrode.

16. Method according to one of claims 1 to 15, **characterized in that** an electrical insulating fluid is used to cool the positive electrode.

17. Product produced in a crystalline or semicrystalline polymer or copolymer obtained with the method according to any one of claims 5 to 15.

18. Device for forming a thermoplastic material according to a method according to any one of claims 1 to 16, said device comprising:
- a die or a forming chamber having a passage for the introduction of the thermoplastic material, said chamber or die having a wall or walls in contact with the thermoplastic material;
- a cooling means for at least partially cooling a wall or walls; and
a means for creating a static electric field in the forming device, **characterized in that** the device comprises
a means for connecting at least a wall or part of a wall of the chamber or die in contact with the thermoplastic material with an electric source in order to create a static electric field between at least this wall or part of a wall and another wall or part of a wall of the chamber or die.

19. Device according to claim 18, **characterized in that** it comprises a first means for connecting a first wall or part of a wall to a terminal of an electric source, and a second means for connecting another wall or part of a wall to another terminal of the electric source or to earth, so that the first wall or part of a wall forms a positive electrode.

20. Device according to claim 18 or 19, **characterized in that** it comprises or is associated with a means for creating a static electric field between a positive electrode and a negative or ground electrode in contact with the thermoplastic material, said means creating between said electrodes or between the positive electrode and earth a static electric field of at least 800,000 V/m, preferably of at least 1,000,000 V/m.

21. Device according to one of claims 18 to 20, **characterized in that** the positive and negative electrode(s) or the ground electrode form walls of a channel in which the thermoplastic material moves in one direction, said electrodes or ground electrode being arranged to create a static electric field which is approximately perpendicular to the direction of flow of the material in the channel.

22. Forming device according to claim 18, **characterized in that** it comprises a die associated with a forming chamber and means for connecting a wall or walls of the die and of the forming chamber to at least one electric source, to create a static electric field in the die and a static electric field in the forming chamber.

23. Forming device according to one of claims 18 to 22, **characterized in that** the forming chamber is a shaping fixture connected to an extrusion die.

24. Device according to any one of claims 18 to 23, **characterized in that** the walls or parts of a wall between which a static electric field is created are arranged to create a radial electric field.

25. Device according to any one of claims 18 to 24, **characterized in that** the means for creating an electric field is arranged with respect to the cooling means to create an electric field in at least one zone of the forming chamber in which the material passes from a temperature higher than the crystallization temperature or close to the crystallization temperature to a temperature lower than the crystallization temperature, preferably close or approximately equal to the glass transition temperature.

26. Device according to any one of claims 18 to 25, **characterized in that** it comprises a mandrel rod intended to form the inner shape of the product formed in the forming chamber, the latter having a wall intended to form the outer shape of the product, and **in that** the mandrel rod and the wall intended to form the outer shape of the product constitute electrodes or an electrode and a ground electrode to create a radial electric field, the mandrel rod advantageously constituting a negative electrode or the ground electrode, while the wall advantageously constitutes a positive electrode.

27. Device according to any one of claims 18 to 26, **characterized in that** it comprises a positive electrode and a negative electrode arranged to form between them an electric field and constituting walls of the forming chamber in contact with the thermoplastic material, the positive electrode advantageously being made from an aluminium alloy, the contact surface of the electrode with the thermoplastic material preferably being provided with a layer of alumina at least 25µm thick.

28. Device according to one of claims 18 to 27, **characterized in that** the walls of the forming device or of the shaping fixture and/or of the die in contact with the material are provided with alumina, in particular are covered with a layer containing alumina.

29. Device according to one of claims 18 to 28, **characterized in that** the forming chamber is a mould.

30. Device according to one of claims 18 to 29, **characterized in that** one or more insulating means extend between the positive electrode or connected to the positive terminal of a current source, and the ground electrode or the negative electrode or connected to the negative terminal of a current source, an insulating means advantageously being formed by a layer of an insulating or dielectric fluid or liquid.

31. Device according to claim 30, **characterized in that** it has a chamber in contact with the positive electrode, in which the insulating liquid or fluid is found, and **in that** it has passages communicating with said chamber, said passages being equipped with a means for connecting the chamber to a circulation system for the insulating liquid or fluid, this system advantageously comprising a cooling system.

32. Device according to one of claims 18 to 31, **characterized in that** the length of the positive electrode or positive electrodes in contact with the material, the length being calculated in the direction in which the material advances in the forming chamber or die, is greater than 5 cm, advantageously greater than 10 cm, preferably greater than 20 cm.
